# EUROPÄISCHE PATENTSCHRIFT

(11) **EP 1 541 393 B1**
(45) Veröffentlichungstag und Bekanntmachung des Hinweises auf die Patenterteilung: **02.09.2009**
(21) Anmeldenummer: 04029320.1
(22) Anmeldetag: 10.12.2004
(51) Int. Cl.: B60G 21/05, B60G 3/06

(54) **Torsionsachse**
Torsion axle
Essieu de torsion

(30) Priorität: 11.12.2003 DE 10357885
(43) Veröffentlichungstag der Anmeldung: 15.06.2005
(73) Patentinhaber: Benteler Automobiltechnik GmbH, 33104 Paderborn (DE)
(72) Erfinder: Drabon, Rodscha, 33154 Salzkotten (DE); Rissling, Robert, 33102 Paderborn (DE); Rose, Leonhard, 33178 Borchen (DE)
(74) Vertreter: Griepenstroh, Jörg

(56) Entgegenhaltungen:
- DE-A1- 3 635 021
- DE-A1- 3 828 828
- DE-A1- 3 842 339
- FR-A- 2 698 825
- US-A- 5 700 026
- PATENT ABSTRACTS OF JAPAN Bd. 015, Nr. 160 (M-1105), 22. April 1991 (1991-04-22) & JP 03 031020 A (DAIHATSU MOTOR CO LTD), 8. Februar 1991 (1991-02-08)
- PATENT ABSTRACTS OF JAPAN Bd. 016, Nr. 576 (M-1345), 16. Dezember 1992 (1992-12-16) & JP 04 224413 A (NISSAN MOTOR CO LTD), 13. August 1992 (1992-08-13)
- PATENT ABSTRACTS OF JAPAN Bd. 2002, Nr. 05, 3. Mai 2002 (2002-05-03) & JP 2002 002247 A (DAIHATSU MOTOR CO LTD), 8. Januar 2002 (2002-01-08)
- PATENT ABSTRACTS OF JAPAN Bd. 1998, Nr. 12, 31. Oktober 1998 (1998-10-31) & JP 10 181326 A (TOYOTA MOTOR CORP), 7. Juli 1998 (1998-07-07)

## Beschreibung

Die Erfindung betrifft eine Verbundlenkerachse mit den Merkmalen des Oberbegriffs des Patentanspruchs 1.

Torsionsachsen, zu denen auch Verbundlenkerachsen zählen, haben die Aufgabe, in Verbindung mit entsprechenden Dämpfungsmitteln Stöße und Schwingungen, die durch die Fahrbewegung hervorgerufen und von der Fahrbahn über das Rad übertragen werden gedämpft in den Fahrzeugaufbau einzuleiten. Verbundlenkerachsen kombinieren die Vorteile eines einfachen Aufbaus bei geringem Raumbedarf und hinreichend guten kinematischen Eigenschaften. Das die beiden Längslenker verbindende Torsionsprofil einer Verbundlenkerachse bewirkt, dass sich bei gleichzeitigen Einfedern eine Längslenkercharakteristik und bei wechselseitigem Einfedern eine Schräglenkercharakteristik ergibt. Zudem wirkt bei Verbundlenkerachsen das Torsionsprofil auch als Stabilisator, der die Aufbauneigung in Kurven reduziert.

An den beiden Längslenkern der Verbundlenkerachse wird jeweils ein Hauptlager zur Anbindung der Verbundlenkerachse an den Fahrzeugaufbau, eine Achszapfenaufnahme zur Befestigung des Rads, eine Stoßdämpferaufnahmebefestigung zur Aufnahme des Stoßdämpfers zwischen der Verbundlenkerachse und dem Fahrzeugaufbau und ein Federteller zur Aufnahme einer entsprechenden Schraubenfeder angebracht. Bekannte Verbundlenkerachsen besitzen grundsätzlich ein biegesteifes, torsionsnachgiebiges Torsionsprofil sowie biege- und torsionssteife Längslenker. Sowohl die Torsionsprofile als auch die Längslenker können aus Hohl- oder Vollprofilen aus Blech oder in Gussausführung hergestellt sein.

Je nach Abstand der Radlager von den Hauptlagern und in Abhängigkeit von der Quersteifigkeit der in der Regel als Gummi-Metall-Lager ausgeführten Hauptlager, erfolgt bei Kurvenfahrt eine Veränderung des Lenkwinkels der Verbundlenkerachse, die zu einem Übersteuem des Kraftfahrzeugs führen kann. Um einem Übersteuem entgegen zu wirken können speziell gestaltete Hauptlager vorgesehen werden (DE 696 08 520 T2).

Es wurden bereits unterschiedliche Vorschläge gemacht, wie die Quersteifigkeit einer Torsionsachse verbessert werden kann. Beispielsweise wird in der JP 04 224413 A vorgeschlagen, am hinteren Ende der Längslenker zusätzliche Querstreben anzuordnen. Die Querstreben nehmen Seitenkräfte auf, ohne dass die Steifigkeit der Längslenker und des Torsionsprofils erhöht werden müsste, was mit einem Massezuwachs einhergehen würde. Ein ähnlicher Vorschlag ist Gegenstand der DE 36 35 021 A1, bei welcher eine Verbundlenkerachse an ihrem hinteren Ende der Längslenker mit einem Federbein versehen ist, wobei die Federbeine derart schräg zueinander geneigt angeordnet sind, dass sie auch Querkräfte aufnehmen können.

In der DE 38 42 339 A1 wird bei einer Verbundlenkerachse sogar vorgeschlagen, zwei Stützlenker vorzusehen, die jeweils vom Längslenker nahe der Radachse zur Fahrzeugmitte führen und dort am Fahrzeugunterbau befestigt sind. Dadurch sollen ebenfalls Seitenkräfte zusätzlich abgestützt werden. In der JP 2002 002247 A wird zudem vorgeschlagen, dass die zusätzlichen Querlenker im mittleren Bereich der Achsanordnung höher angelenkt sind als an ihren äußeren Enden, d.h., an den Längslenkern. Auch in der FR 2 698825 wird ein Vorschlag gemacht, wie bei einer Verbundlenkerachse mehrere Lenker an den hinteren Enden der Längslenker angeordnet werden können, um die Steifigkeit der Achsanordnung zu erhöhen.

Bei Einzelradaufhängungen, wie sie in der JP 03 031020 A offenbart werden, ist es zudem möglich, relativ flach-, jedoch hochbauende Längslenker vorzusehen, die einerseits ähnlich einer Verbundlenkerachse überhaupt am Fahrzeugaufbau gelagert sind und an ihren hinteren Enden über Federbeine und zur Fahrtrichtung verlaufende Querstreben abgestützt sind. Bei derartigen Einzelradaufhängungen ist in der Regel ein Stabilisator in Form eines schlanken, biegeweichen Torsionsstabs vorgesehen, der sich an dem Fahrzeugaufbau abstützt und der Wankneigung des Fahrzeugs entgegenwirkt.

Schließlich zählt es durch die DE 38 28 828 A1 zum Stand der Technik, Verbundlenkerhinterachsen mit in Hochrichtung biegesteifen, jedoch in Längsrichtung biegeweichen Längslenkern auszugestalten. Die Längslenker sind jedoch torsionssteif bemessen, damit sich keine Radsturzänderung beim Einfedern ergibt. Das setzt allerdings entsprechend große Querschnitte bei wiederum hohem Gewicht der Längslenker voraus.

Ausgehend vom Stand der Technik liegt der Erfindung die Aufgabe zugrunde, eine Torsionsachse für ein Kraftfahrzeug aufzuzeigen, die gegenüber herkömmlichen Verbundlenkerachsen verbesserte fahrdynamische Eigenschaften bei gewichtsreduzierter Bauweise ermöglicht.

Diese Aufgabe wird bei der erfindungsgemäßen Verbundlenkerachse dadurch gelöst, dass an den in Fahrtrichtung hinteren Enden der Längslenker jeweils Seitenkräfte aufnehmende Querlenker angekoppelt sind. Der Begriff "Querlenker" ist im Sinne der Erfindung als Lenker, der im Winkel zum Längslenker angeordnet ist, zu verstehen. Der Querlenker kann gegenüber dem Längslenker auch schräg angeordnet sein, entsprechend der Funktionsweise eines Schräglenkers. Die Querlenker nehmen einen Großteil der bei Kurvenfahrt eingeleiteten Seitenkräfte auf, so dass sich gegenüber herkömmlichen Verbundlenkerachsen eine Spurkorrektur ergibt, die zumindest das kurvenäußere Rad in Vorspur bringt und dadurch einem Übersteuem des Kraftfahrzeugs entgegenwirkt. Durch die zusätzlichen Querlenker werden auf die Hauptlager geringere Seitenkräfte übertragen. Die Hauptlager können daher auch eine verringerte Quersteifigkeit besitzen, ohne dass dies einen nachteiligen Effekt auf das Fahrverhalten hat. Eine verringerte Quersteifigkeit der Hauptlager kann im Rahmen der Erfindung sogar gewünscht sein, damit sich die vorderen Enden der Längslenker quer zur Fahrtrichtung verschieben können, so dass durch diese Spurkorrekturfunktion eine zusätzliche Vorspur erzeugt werden kann, wodurch einem Übersteuem entgegen gewirkt wird. In diesem Zusammenhang ist es zweckmäßig, die Querlenker relativ hart, d.h. quersteif zu lagern, damit zum einen die gewünschte Spurkorrektur durch Querverschiebung in den Hauptlagern erreicht wird und damit zum anderen nicht die Verbundlenkerachse insgesamt parallel zur Ausgangsposition verlagert wird. Vielmehr wird als kinematisches System das Verlagern eines im Bereich der Hauptlager verschiebbaren Parallelogramms mit einem Fixpunkt in der Mitte zwischen den Querlenkern angestrebt.

Es ist vorgesehen, dass die Querlenker jeweils mindestens zwei Lenkerstreben aufweisen, die zum einen am Fahrzeugaufbau und zum anderen an den Längslenker angelenkt sind. Das ist zweckmäßig, wenn aufgrund des reduzierten Widerstandsmoments gegen Biegung auch das Widerstandsmoment gegen Torsion herabgesetzt worden ist, so dass sich beim Einfedern eine Veränderung des Sturzes durch Torsion der Längslenker ergibt. Durch die Verwendung zweier Lenkerstreben, die in unterschiedlichen Höhenniveaus an den Längslenkern angeordnet sind, können unerwünschte Sturzänderungen ausgeglichen werden.

Es ist vorgesehen, dass die Längslenker als hochkant gestellte Metallbänder ausgebildet sind. Bei den Metallbändern handelt es sich um Stanz-Biegeteile mit im Wesentlichen konstanter Dicke, wobei das Verhältnis zwischen Höhe und Dicke größer als 5:1 ist. Die Höhe des Metallbandes kann anforderungsgerecht über die Längserstreckung der Längslenker variieren. Beispielsweise kann die Höhe im Anbindungsbereich des Torsionsprofils größer bemessen sein als in anderen Bereichen, indem an der Oberkante und/oder der Unterkante des Metallbands verbreiterte Bereiche ausgebildet sind.

Es ist im Rahmen des Patentanspruchs 2 vorgesehen, die Querlenker in Fahrtrichtung gesehen, hinter der Mittelachse der Radlager an den Längslenkern anzukoppeln. Grundsätzlich ist es zwar möglich, die Längslenker im Bereich der Mittelachse der Radlager anzuordnen, allerdings würden bei dieser Konfiguration die Seitenkräfte fast vollständig auf die Querlenker übertragen werden, so dass eine Spurkorrektur durch Verlagerung der Längslenker in den Hauptlagern nur sehr eingeschränkt erfolgen kann. Wenn die Querlenker hingegen in Fahrtrichtung gesehen hinter der Mittelachse der Radlager an den Längslenkern angekoppelt sind, verteilt sich die Seitenkraft auf die Querlenker und die Hauptlager. Die Reaktionskräfte in den Hauptlagern bzw. den Querlenkern sind abhängig von dem Abstand des Radlagers von dem Querlenker bzw. dem Hauptlager. Je nachdem, wie diese Längenverhältnisse bemessen sind, ergeben sich unterschiedliche Reaktionskräfte am Hauptlager bzw. Querlenker, wobei die Reaktionskraft am Querlenker bei einer quer zur Fahrtrichtung angreifenden Seitenkraft grundsätzlich größer sein sollte als im Bereich der Hauptlager. Mit anderen Worten, der Abstand des Querlenkers von dem Radlager ist kleiner als der Abstand des Hauptlagers zu dem Radlager.

Gemäß den Merkmalen des Patentanspruchs 3 ist vorgesehen, dass die Längslenker zumindest in einem sich zwischen der Verbindungsstelle des Torsionsprofils und der Verbindungsstelle mit dem Querlenker erstreckenden Längenabschnitt einen gegenüber Biegebeanspruchungen um die Hochachse geringeren Widerstand gegen Biegungen besitzen als gegenüber Biegebeanspruchungen um die Querachse. Während bei herkömmlichen Verbundlenkerachsen ohne zusätzliche Querlenker aufgrund der angreifenden Seitenkräfte hohe Biegemomente um die Hochachse der Längslenker auftreten, sind diese bei der erfindungsgemäßen Verbundlenkerachse wesentlich geringer. Dadurch können die Längslenker, bezogen auf ihre Hochachse, wesentlich biegeweicher ausgeführt werden, als bei Verbundlenkerachsen ohne zusätzliche Querlenker. Selbstverständlich ist es auch bei der erfindungsgemäßen Verbundlenkerachse erforderlich, die Längslenker hinreichend biegesteif bezüglich Biegungen um die Querachse zu gestalten, damit zur Erreichung der gewünschten Einfederungscharakteristik Momente in das Torsionsprofil und über das Torsionsprofil in den zweiten Längslenker eingeleitet werden können. Die Längslenker brauchen daher lediglich so gestaltet zu werden, dass sie einen höheren Widerstand gegen Biegung um ihre Querachse besitzen als gegen Biegung um ihre Hochachse. Aufgrund der in den Längslenkern wirkenden Kräfteverhältnisse ist es möglich, erhebliche Materialeinsparungen im Bereich des Längslenkers vorzusehen.

Grundsätzlich ist es möglich, bei metallischen Längslenkern den Widerstand gegen Biegung durch gezielte lokale Wärmebehandlungen einzustellen, ohne dass dabei wesentliche geometrische Veränderungen gegenüber den bekannten Bauformen vorzunehmen wären. Aus Gründen der Gewichtsersparnis wird es jedoch als vorteilhaft angesehen, bei der erfindungsgemäßen Verbundlenkerachse Längslenker einzusetzen, bei denen das Widerstandsmoment gegen Biegung in Bezug auf die Hochachse kleiner ist als das Widerstandsmoment gegen Biegung in Bezug auf die Querachse (Patentanspruch 4). Das Widerstandsmoment hängt entscheidend von der Querschnittsgestaltung der Längslenker ab. Aufgrund der erwünschten Widerstandsmomente kann bei der beanspruchten Verbundlenkerachse insbesondere ein Profil zum Einsatz kommen, dass sich im Querschnitt räumlich weniger in Richtung seiner Querachse als in Richtung seiner Hochachse erstreckt. Der Längslenker kann z.B. ein relativ hohes Rechteckprofil mit geringer Breite sein, wobei die Widerstandsmomente gegen Biegung derart bemessen sind, dass sich der Längslenker bei Kurvenfahrt gezielt um seine Hochachse biegt. Das hat zur Folge, dass sich die Spur der Hinterräder nicht nur aufgrund der seitlichen Verschiebung der Hauptlager verändert, sondern zudem auch durch die Biegung der Längslenker um ihre jeweilige Hochachse. Die Gewichtseinsparung im Bereich der Längslenker wird zwar durch die zusätzlichen Querlenker teilweise wieder kompensiert, allerdings ergibt sich bei insgesamt geringerem Gewicht eine deutlich verbesserte Spurführung bei guter Federcharakteristik der Torsionsachse.

Die Querlenker können grundsätzlich in einem von 90° abweichenden Winkel zu den Längslenkern ausgerichtet sein. Als besonders günstig wird es jedoch angesehen, die Querlenker quer zur Fahrtrichtung anzuordnen, da auf diese Weise der Anteil der Normalkräfte in den Lagerstellen des Querlenkers an dem Fahrzeugaufbau und an den Längslenkern am größten ist und keine zusätzlichen Schubkräfte aufgefangen werden müssen (Patentanspruch 5). Diese können wie bisher in den Hauptlagern aufgenommen werden.

Es kann auch vorgesehen sein, dass die oberen und unteren Lenkerstreben ungleich lang sind, um das Einfederungsverhalten gezielt zu beeinflussen (Anspruch 6). D.h. die obere Lenkerstrebe kann kürzer sein als die untere Lenkerstrebe bzw. die untere Lenkerstrebe ist kürzer als die obere Lenkerstrebe. In Abhängigkeit von der auftretenden Seitenkraft und in Abhängigkeit des Einfederungsgrads wird eine aufgezwungene Spuränderung und Sturzänderung am Rad bewirkt. Ein wesentlicher Vorteil der erfindungsgemäßen Verbundlenkerachse in dieser Ausführungsform ist, dass die gewünschten Spur- und Sturzänderungen gezielt als Spur- und Sturzkorrekturfunktion eingesetzt und unabhängig voneinander realisiert werden können. Diese Vorteile können bei der erfindungsgemäßen Verbundlenkerachse sehr kostengünstig erreicht werden.

In vorteilhafter Ausgestaltung des Erfindungsgedankens ist im Rahmen des Patentanspruchs 7 vorgesehen, dass die obere Lenkerstrebe durch ein radführendes Federbein ersetzt ist. Dieses Federbein umfasst in üblicher Bauart eine Schraubendruckfeder und einen Stoßdämpfer. Derartige Federbeine in Kombination mit einem unteren Querlenker werden häufig auch McPherson-Federbein genannt. Dieses Federbein bewirkt eine Veränderung von Sturz- und Spurweite beim Einfedern und verleiht der erfindungsgemäßen Verbundlenkerachse in Kombination mit dem Torsionsprofil ein spezifisches Einfederungsverhalten. Grundsätzlich ist es im Rahmen der Erfindung nicht erforderlich, dass die Lenkerstreben eines Querlenkers zwingend in einer gemeinsamen Querebene des Kraftfahrzeugs angeordnet sind. Insbesondere, wenn die obere Lenkerstrebe durch ein Federbein ersetzt ist, kann es zur Kraftanleitung in das Federbein zweckmäßig sein, dieses im Bereich der Radachse anzuordnen und dort zumindest mittelbar mit dem Längslenker zu verbinden (Anspruch 10). Die Mittellängsachse des Federbeins kann die Radachse räumlich schneiden.

Als besonders vorteilhaft wird es angesehen, wenn an den Metallbändern eine Radaufnahme einstückig ausgebildet ist (Patentanspruch 9). Bei hohen Metallbändern kann die Radaufnahme unter Umständen direkt in das Metallband integriert sein. Grundsätzlich ist es jedoch aus Gründen der Gewichtsersparnis zweckmäßig, das Metallband in der Höhe so gering wie möglich zu bemessen, wobei die Radaufnahme nicht zwingend mit dem Verlauf des Längslenkers bzw. des Metallblechs zusammenfallen muss. In einer Ausführungsform der erfindungsgemäßen Verbundlenkerachse kann die Radaufnahme, d.h. die Radachse oberhalb der Längslenker verlaufen (Patentanspruch 10). Für diesen Fall kann eine nach oben weisende flanschartige Erweiterung an den Metallbändern ausgebildet sein. Das hochkant gestellte Metallband erhält dadurch eine im wesentlichen T-förmige Konfiguration. Dadurch dass die Radaufnahme einstückig mit den Längslenkern ausgebildet ist, entfällt als Fertigungsschritt das insbesondere stoffschlüssige Verbinden einer separaten Radaufnahme mit den Längslenkern. Selbstverständlich ist im Rahmen der Erfindung nicht ausgeschlossen, auch separat gefertigte Radaufnahmen mit den Längslenkern unter Verwendung von Adhäsionsstoffen, von mechanischen Verbindungselementen, formschlüssig oder stoffschlüssig, insbesondere schweißtechnisch miteinander zu verbinden.

Die erweiterte Verbundlenkerachse verbindet die fahrdynamischen Vorteile einer Mehrlenkerachse mit den Kosten-, Package- und Gewichtsvorteilen einer Verbundlenkerachse.

Die Erfindung wird nachfolgend anhand des in den schematischen Zeichnungen dargestellten Ausführungsbeispiels näher erläutert. Es zeigen:
- Figur 1: in der Draufsicht eine Verbundlenkerachse, aus dem Stand der Technik;
- Figur 2: in der Draufsicht eine schematische Darstellung der Verbundlenkerachse der Figur 1 ohne zusätzliche Querlenker bei Kurvenfahrt;
- Figur 3: eine schematische Darstellung einer Verbundlenkerachse in der Draufsicht mit zusätzlichen Querlenkern bei Geradeausfahrt;
- Figur 4: die Verbundlenkerachse der Figur 3 in der Draufsicht bei Kurvenfahrt mit quer zur Fahrtrichtung verschobenen Hauptlagern;
- Figur 5: in der Draufsicht eine schematische Darstellung einer Ausführungsform einer Verbundlenkerachse mit biegeweichen Längslenkern bei Kurvenfahrt;
- Figur 6: einen Längslenker einer Verbundlenkerachse in der Draufsicht und im Schnitt;
- Figur 7: eine schematische Darstellung einer Ausführungsform einer Verbundlenkerachse in der Rückansicht mit zwei Lenkerstreben;
- Figur 8: eine schematische Darstellung einer weiteren Ausführungsform einer Verbundlenkerachse in der Rückansicht mit einer Lenkerstrebe und einem Federbein
und
- Figuren 9 bis 12: eine Ausführungsform einer Verbundlenkerachse in verschiedenen Ansichten.

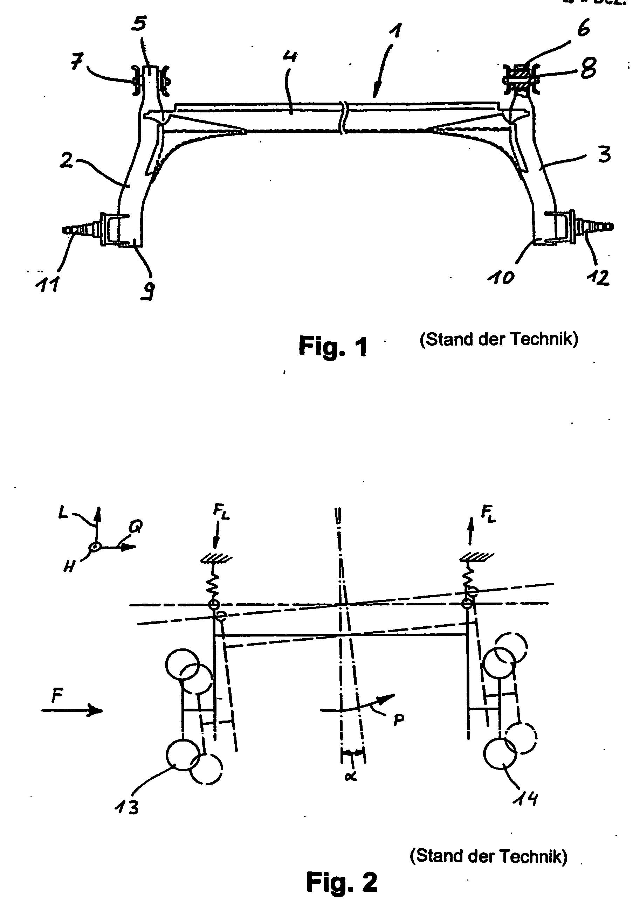

Figur 1 zeigt eine Verbundlenkerachse 1 bekannter Bauart, bei welcher zwei Längslenker 2, 3 über ein sich quer zu den Längslenkern 2, 3 erstreckendes Torsionsprofil 4 mit einander verbunden sind. An den vorderen Enden 5, 6 der Längslenker 2, 3 ist die Verbundlenkerachse 1 mit Hauptlagern 7, 8 an einem nicht näher dargestellten Fahrzeugaufbau schwenkbeweglich, längs und quer zur Fahrtrichtung begrenzt verschiebbar gelagert. Bei den Hauptlagern 7, 8 handelt es sich um Gummi-Metall-Lager.

An den hinteren Enden 9, 10 der Längslenker 2, 3 stehen Achszapfen 11, 12 seitlich ab, an welchen in nicht näher dargestellter Weise Räder gelagert sind.

Figur 2 zeigt schematisch, wie sich die Verbundlenkerachse 1 der Figur 1 bei Einwirkung einer Seiten kraft F verhält. Die Seiten kraft F tritt beispielsweise bei einer Kurvenfahrt nach rechts hauptsächlich am kurvenäußeren Rad auf. Es handelt sich hierbei um die Seitenführungskraft, die an der Aufstandsfläche der Reifen 13, 14 angreift. Durch die Seitenkraft F neigt sich die gesamte Verbundlenkerachse 1 um einen Winkel α gegenüber der Mittellängsachse MLA des Fahrzeugs. Dabei wirkt auf die in der Bildebene rechte Lagerbuchse des Hauptlagers 8 eine nach vorne gerichtete Längskraft F_{R} und an der linken Lagerbuchse eine nach hinten gerichtete Reaktionskraft F_{L}. Demgemäß wird die gesamte Verbundlenkerachse 1 im Gegenuhrzeigersinn verdreht, so dass sich der Lenkwinkel in Richtung des Pfeils P verändert, was ein Übersteuern des Fahrzeugs zur Folge haben kann. Des Weiteren erfolgt, je nach Ausgestaltung der Hauptlager 7, 8 eine seitliche Verschiebung der Verbundlenkerachse 1.

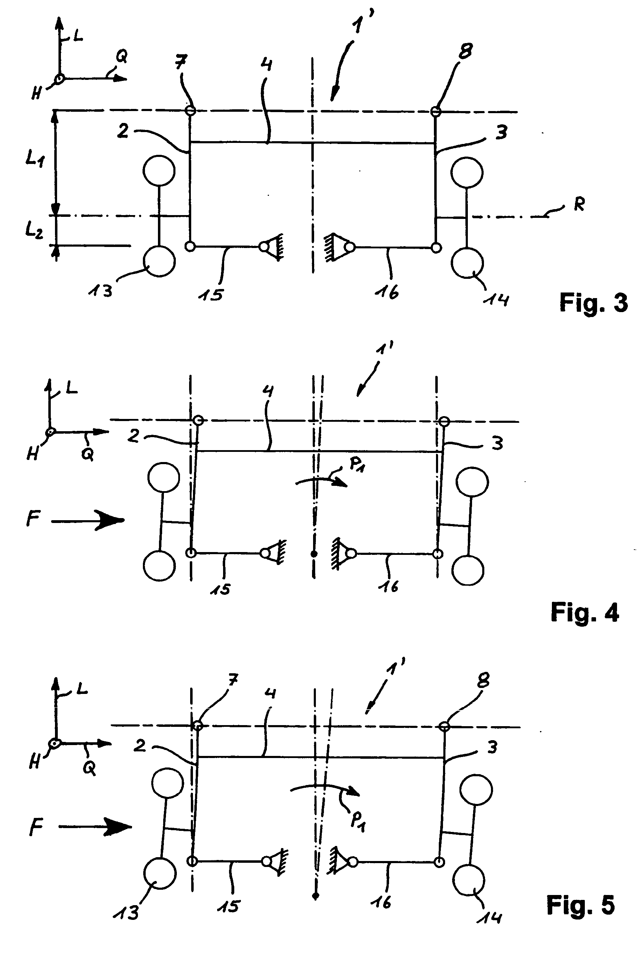

Figur 3 zeigt eine erfindungsgemäße Ausführungsform einer Verbundlenkerachse 1', bei welcher an den hinteren Enden 9, 10 der Längslenker 2, 3 zusätzlich Querlenker 15, 16 im rechten Winkel zu den Längslenkern 2, 3 angeordnet sind.

Grundsätzlich ist der Abstand L₁ der Hauptlager 7, 8 von der Radachse R eher größer als der Abstand L₂ der Querlenker 15, 16 von der Radachse R. Entsprechend verhalten sich die quer zur Fahrtrichtung angreifenden Reaktionskräfte im Bereich der Hauptlager 7, 8 und der Querlenker 15, 16 umgekehrt proportional zu dem Hebelverhältnis L₁ : L₂. Da die Längslenker 2, 3 quersteif an dem Fahrzeugaufbau abgestützt sind und da die Hauptlager 7, 8 nachgiebig verhalten, erfolgt eine Parallelverschiebung der Verbundlenkerachse 1', wie sie in Figur 4 dargestellt ist. Dies bewirkt eine Veränderung des Lenkwinkels in Richtung des Pfeils P₁, also im Uhrzeigersinn, was theoretisch ein Untersteuern des Fahrzeugs zur Folge hat. Selbstverständlich ist es im Rahmen der Erfindung möglich, die Nachgiebigkeit , d.h. die Quersteifigkeit in den Hauptlagern 7, 8 derart einzustellen, dass sich eine Vorspur von 0° ergibt, d.h. dass sich der Lenkwinkel nicht verändert.

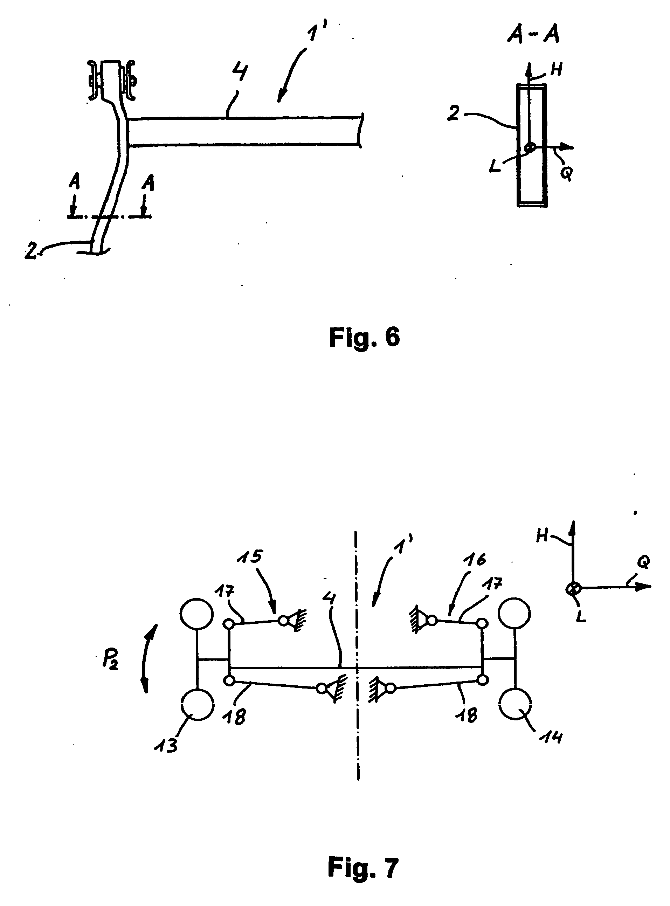

Der Lenkwinkel ist nicht nur abhängig von der Quersteifigkeit der Hauptlager 7, 8 und der Querlenker 15, 16, sondern auch von dem Widerstand gegen Biegung der Längslenker 2, 3. Betrachtet man die hinteren Enden der Längslenker 2, 3 als Festlager, wird durch die Seitenkraft F ein Biegemoment in den Längslenker 2, 3 eingeleitet, das je nach Widerstandsmoment gegen Biegung zu einer Verformung der Längslenker 2, 3 führt (Figur 5). Diese Biegeverformung des Längslenkers 2, 3 bewirkt ebenfalls eine Veränderung des Lenkwinkels in Richtung des Pfeils P₁, d.h. es wird je nach Widerstandsmoment der Längslenker 2, 3 einem Übersteuern des Kraftfahrzeugs entgegengewirkt. Figur 6 zeigt einen Querschnitt durch einen Längslenker entlang der Linie A-A. Es ist erkennbar, dass es sich um ein Profil geringer Breite handelt, das allerdings eine hinreichende Biegesteifigkeit gegen Biegung um seine Querachse besitzt, da es höher als breit ist.

Figur 7 zeigt eine Ausführungsform, bei welcher der Querlenker 15 eine obere und eine untere Lenkerstrebe 17, 18 umfasst, die im Abstand zueinander angeordnet sind. Beispielhaft sind die Lenkerstreben 17, 18 mit unterschiedlicher Länge ausgeführt. Selbstverständlich können die Lenkerstreben 17, 18 auch gleich lang sein. Aufgabe der Lenkerstreben 17, 18 ist es, den Sturz der Räder zu steuern. Durch die Verwendung von zwei Lenkerstreben 17, 18 ist es möglich, die innerhalb der Längslenker 2, 3 um ihre Längsrichtung wirkenden Torsionsmomente abzufangen, so dass die Längslenker 2, 3 noch gewichtssparender konfiguriert werden können, was sich vorteilhaft auf die fahrdynamischen Eigenschaften und auf das Gesamtgewicht des Kraftfahrzeugs auswirken kann. Der Pfeil P₂ verdeutlicht die Bewegungsrichtung des linken Rades der Torsionsachse 1 aus dieser Perspektive.

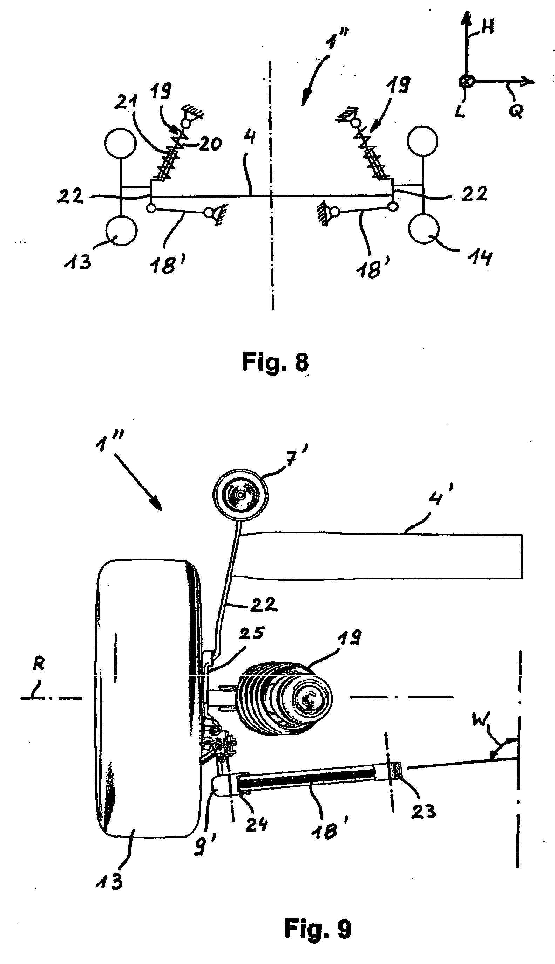

Die Ausführungsform der Figur 8 unterscheidet sich von derjenigen der Figur 7 dadurch, dass die obere Lenkerstrebe 17 durch ein radführendes Federbein 19 ersetzt ist. Das Federbein 19 umfasst eine Schraubendruckfeder 20, die einen Stoßdämpfer 21 umgibt. Das Federbein 19 ist analog einer Lenkerstrebe einerseits an der Karosserie und andererseits am Längslenker 22 abgestützt. Aufgrund der bei der Einfederung der Räder 13, 14 wirkenden Kräfte weist das Federbein 19 schräg nach oben.

In den Figuren 9 bis 12 wird ein konkretisiertes Ausführungsbeispiel einer Verbundlenkerachse 1" gezeigt, bei welcher der Längslenker 22 als hochkant gestelltes Metallband ausgebildet ist. Ein weiterer Unterschied, insbesondere gegenüber der Ausführungsform der Figur 6 ist, dass sich die Orientierungen des Hauptlagers 7' um 90° unterscheiden. In der Ausführungsform der Figuren 9 bis 12 weist die Lagerachse des Hauptlagers 7' aus der Bildebene heraus, während bei gleicher Ansicht die Lagerachse in Figur 6 in der Bildebene liegt. Aus den Figuren 9 bis 12 ist erkennbar, dass das Federbein 19 im Bereich der Radachse R angeordnet ist, d.h. im horizontalen Abstand von der Lenkerstrebe 18'. Die Lenkerstrebe 18' ist im Winkel W zur Mittellängsachse MLA des Kraftfahrzeugs angeordnet, wobei das innere Ende 23 der Lenkerstrebe 18' näher an der Radachse R liegt als das längslenkerseitige Ende 24.

Das heißt, der eingezeichnete Winkel W ist größer als 90°. Des Weiteren ist in Figur 9 erkennbar, dass das Metallband des Längslenkers 22 über seine Längserstreckung nicht gerade verläuft. Es ist ausgehend vom Hauptlager 7' zunächst leicht nach außen abgewinkelt, wobei das Torsionsprofil 4' im schrägen Winkel an dem Längslenker 22 befestigt ist. Im Bereich des Federbeins 19 bzw. des Rads ist der Längslenker 22 U-förmig nach außen ausgestellt. Diese U-förmige Ausstellung ist eine Radaufnahme 25, an der nach außen weisend der Radzapfen und ein Bremsapparat 26 und zur Fahrzeugmitte hin das Federbein 19 befestigt ist. Am hinteren Ende 9' des Längslenkers 22 ist eine U-förmige Lagertasche zur Aufnahme der Lenkerstrebe 18' ausgebildet.

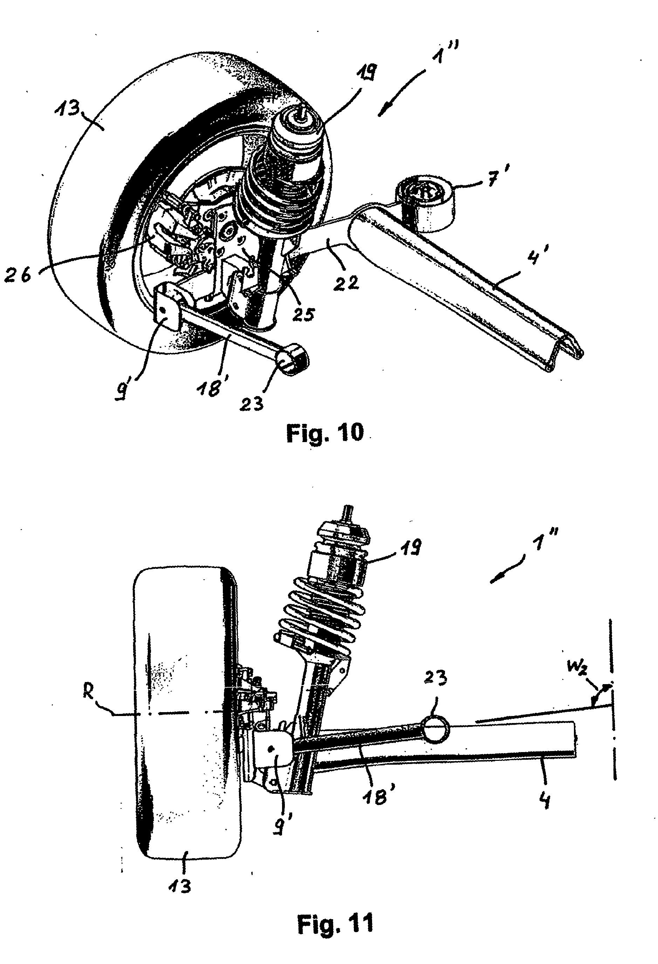

Eine Abwandlung gegenüber der Figur 8 ist, dass die Lenkerstrebe 18' in einem Winkel W2 zur Vertikalen steht, wobei W2 größer als 90° ist (Figur 11).

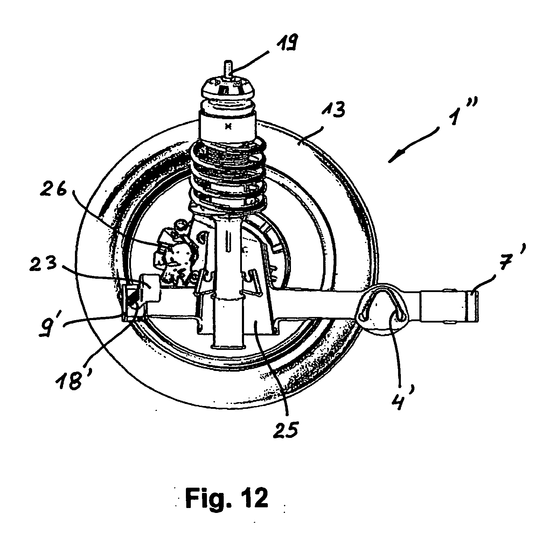

Figur 12 verdeutlicht, wie sich die Höhe des Längslenkers 22 über seinen Verlauf ändert und insbesondere im Anbindungsbereich an das U-förmig konfigurierte Torsionsprofil 4', sowie im Bereich der einstückig ausgebildeten Radaufnahme 25 deutlich nach oben aber auch nach unten verbreitert ist, so dass sich eine T-förmige Konfiguration ergibt.

### Bezugszeichenaufstellung:

- 1 -: Verbundlenkerachse
- 1' -: Verbundlenkerachse
- 1" -: Verbundlenkerachse
- 2 -: Längslenker
- 3 -: Längslenker
- 4 -: Torsionsprofil
- 4' -: Torsionsprofil
- 5 -: vorderes Ende v. 2
- 6 -: vorderes Ende v. 3
- 7 -: Hauptlager
- 7' -: Hauptlager
- 8 -: Hauptlager
- 9 -: hinteres Ende v. 2
- 9' -: hinteres Ende v. 2
- 10 -: hinteres Ende v. 3
- 11 -: Achszapfen
- 12 -: Achszapfen
- 13 -: Reifen
- 14 -: Reifen
- 15 -: Querlenker
- 16 -: Querlenker
- 17 -: obere Lenkerstrebe
- 18 -: untere Lenkerstrebe
- 18' -: untere Lenkerstrebe
- 19 -: Federbein
- 20 -: Schraubendruckfeder
- 21 -: Stoßdämpfer
- 22 -: Längslenker
- 23 -: Ende v. 18'
- 24 -: Ende v. 18'
- 25 -: Radaufnahme
- 26 -: Bremsapparat

- F -: Seitenkraft
- F_{L} -: Längskraft
- F_{R} -: Reaktionskraft
- H -: Hochachse
- L -: Längsachse
- L₁ -: Abstand zw. 7, 8 und R
- L₂ -: Abstand zw. 15, 16 und R
- MLA -: Mittellängsachse
- P -: Pfeil
- P₁ -: Pfeil
- P₂ -: Pfeil
- Q -: Querachse
- R -: Radachse
- W -: Winkel
- W₂ -: Winkel

## Patentansprüche

1. Verbundlenkerachse mit zwei Längslenkern (2, 3, 22), die über ein sich quer zur den Längslenkern (2, 3, 22) erstreckendes, torsionsnachgiebiges, biegesteifes Torsionsprofil (4, 4') miteinander verbunden und mit ihren vorderen Enden (5, 6) in Hauptlagern (7, 7', 8) schwenkbeweglich gegenüber einem Fahrzeugaufbau gelagert sind, mit den in Fahrtrichtung hinteren Enden (9, 9', 10) der Längslenker (2, 3, 22) jeweils Seitenkräfte (F) aufnehmende Querlenker (15, 16, 18') gekoppelt sind, **dadurch gekennzeichnet, dass** die Querlenker (15, 16)jeweils mindestens zwei Lenkerstreben (17, 18) aufweisen, die zum einen am Fahrzeugaufbau und zum anderen an den Längslenkern (2, 3) angelenkt sind, wobei obere Lenkerstreben (17) und untere Lenkerstreben (18) vorgesehen sind, wobei die Anlenkpunkte der Lenkerstreben (17, 18) in unterschiedlichen Höhenniveaus angeordnet sind, wobei die Längslenker (22) als hochkant gestellte Metallbänder ausgebildet sind, wobei die Metallbänder Stanz-Biegeteile mit einer im Wesentlichen konstanten Dicke sind und wobei das Verhältnis zwischen Höhe und Dicke größer ist als 5:1.

2. Verbundlenkerachse nach Anspruch 1, **dadurch gekennzeichnet, dass** die Querlenker (15, 16, 18') in Fahrtrichtung gesehen hinter der Radachse (R) der Räder mit den Längslenkern (2, 3, 22) gekoppelt sind.

3. Verbundlenkerachse nach Anspruch 1 oder 2, **dadurch gekennzeichnet, dass** die Längslenker (2, 3, 22) eine sich in ihre Längsrichtung erstreckende Längsachse (L), eine sich quer zur Fahrtrichtung erstreckende Querachse (Q) und eine nach oben weisende, senkrecht zur Längsachse (L) und senkrecht zur Querachse (Q) stehende Hochachse (H) besitzen, wobei die Längslenker (2, 3, 22) zumindest in einem sich zwischen der Verbindungsstelle des Torsionsprofils (4, 4') und dem Querlenker (15, 16, 22) erstreckenden Längenabschnitt einen gegenüber Biegebeanspruchungen um die Hochachse (H) geringeren Widerstand gegen Biegung besitzen als gegenüber Biegebeanspruchungen um die Querachse (Q).

4. Verbundlenkerachse nach Anspruch 3, **dadurch gekennzeichnet, dass** das Widerstandsmoment gegen Biegung der Längslenker (2, 3, 22) in Bezug auf die Hochachse (H) kleiner ist als das Widerstandsmoment gegen Biegung in Bezug auf die Querachse (Q).

5. Verbundlenkerachse nach einem der Ansprüche 1 bis 4, **dadurch gekennzeichnet, dass** die Querlenker (15, 16, 18') quer zur Fahrtrichtung angeordnet sind.

6. Verbundlenkerachse nach einem der Ansprüche 1 bis 5, **dadurch gekennzeichnet, dass** die oberen und unteren Lenkerstreben (17, 18) ungleich lang sind.

7. Verbundlenkerachse nach Anspruch 1, **dadurch gekennzeichnet, dass** die obere Lenkerstrebe durch eine Schraubendruckfeder (20) und einen Stoßdämpfer (21) aufweisendes Federbein (19) ersetzt ist.

8. Verbundlenkerachse nach Anspruch 7, **dadurch gekennzeichnet, dass** das Federbein (19) im Bereich der Radachse (R) zumindest mittelbar mit dem Längslenker (22) verbunden ist.

9. Verbundlenkerachse nach Anspruch 1, **dadurch gekennzeichnet, dass** an den Längslenkern (22) eine Radaufnahme (25) einstückig ausgebildet ist.

10. Verbundlenkerachse nach einem der Ansprüche 1 bis 9, **dadurch gekennzeichnet, dass** die Längslenker (2, 3, 22) unterhalb der Radachse (R) verlaufen.

## Claims

1. Twist-beam rear axle having two longitudinal control arms (2, 3, 22) which are connected to one another via a torsion-flexible, deflection-resistant torsion profile (4, 4') extending transverse to the longitudinal control arms (2, 3, 22) and which are mounted with their front ends (5, 6) in main bearings (7, 7', 8) so as to be able to move in a pivoting manner relative to a vehicle structure, transverse control arms (15, 16, 18'), which absorb lateral forces (F) in each case, are coupled, in the direction of travel, to the rear ends (9, 9', 10) of the longitudinal control arms (2, 3, 22), **characterised in that** the transverse control arms (15, 16) in each case have at least two control arm struts (17, 18) which, on the one hand, are linked to the vehicle structure and, on the other hand, to the longitudinal control arms (2, 3), wherein upper control arm struts (17) and lower control arm struts (18) are provided, wherein the link points of the control arm struts (17, 18) are arranged at different height levels, wherein the longitudinal control arms (22) are formed as upended metal strips, wherein the metal strips are punched bent parts with an essentially constant thickness and wherein the ratio between height and thickness is greater than 5:1.

2. Twist-beam rear axle according to Claim 1, **characterised in that** the transverse control arms (15, 16, 18') are coupled to the longitudinal control arms (2, 3, 22) behind the wheel axis (R) of the wheels as seen in the direction of travel.

3. Twist-beam rear axle according to Claim 1 or 2, **characterised in that** the longitudinal control arms (2, 3, 22) possess a longitudinal axis (L) extending in their longitudinal direction, a transverse axis (Q) extending transverse to the direction of travel and a vertical axis (H) pointing upwards and standing perpendicular to the longitudinal axis (L) and perpendicular to the transverse axis (Q), wherein the longitudinal control arms (2, 3, 22) possess less resistance to bending in relation to bending stresses about the vertical axis (H) than relative to bending stresses about the transverse axis (Q) at least in a length portion extending between the connecting point of the torsion profile (4, 4') and the transverse control arm (15, 16, 22).

4. Twist-beam rear axle according to Claim 3, **characterised in that** the section modulus to bending of the longitudinal control arms (2, 3, 22) in relation to the vertical axis (H) is smaller than the section modulus to bending in relation to the transverse axis (Q).

5. Twist-beam rear axle according to one of Claims 1 to 4, **characterised in that** the transverse control arms (15, 16, 18') are arranged transverse to the direction of travel.

6. Twist-beam rear axle according to one of Claims 1 to 5, **characterised in that** the upper and lower control arm struts (17, 18) are of unequal length.

7. Twist-beam rear axle according to Claim 1, **characterised in that** the upper control arm strut is replaced by a helical compression spring (20) and a spring leg (19) having a shock absorber (21).

8. Twist-beam rear axle according to Claim 7, **characterised in that** the spring leg (19) is connected at least indirectly to the longitudinal control arm (22) in the region of the wheel axis (R).

9. Twist-beam rear axle according to Claim 1, **characterised in that** a wheel mount (25) is formed in one piece on the longitudinal control arms (22).

10. Twist-beam rear axle according to one of Claims 1 to 9, **characterised in that** the longitudinal control arms (2, 3, 22) run below the wheel axis (R).

## Revendications

1. Essieu à bras combinés comprenant deux bras longitudinaux (2, 3, 22), qui sont reliés l'un à l'autre via un profilé de torsion (4, 4') rigide vis-à-vis de la flexion et souple vis-à-vis de la torsion, s'étendant transversalement aux bras longitudinaux (2, 3, 22) et sont montés avec leurs extrémités antérieures (5, 6) dans des paliers principaux (7, 7', 8) avec possibilité de pivotement par rapport à une superstructure de véhicule, et les extrémités (9, 9', 10), postérieures en direction de circulation, des bras longitudinaux (2, 3, 22) sont couplées à des bras transversaux (15, 16, 18') respectifs qui encaissent les forces latérales (F), **caractérisé en ce que** les bras transversaux (15, 16) comprennent chacun au moins deux entretoises (17, 18) qui sont articulées d'une part sur la superstructure du véhicule et d'autre part sur les bras longitudinaux (2, 3), de telle manière qu'il est prévu des entretoises supérieures (17) et des entretoises inférieures (18), les points d'articulation des entretoises (17, 18) étant prévus à des niveaux différents en hauteur, dans lequel les bras longitudinaux (22) sont réalisés par des bandes de métal disposées sur chant, lesdites bandes de métal étant des pièces réalisées par poinçonnage/pliage avec une épaisseur sensiblement constante, le rapport entre la hauteur et d'épaisseur étant supérieur à 5:1.

2. Essieu à bras combinés selon la revendication 1, **caractérisé en ce que** les bras transversaux (15, 16, 18) sont couplés aux bras longitudinaux (2, 3, 22) en arrière des axes (R) des roues, vus en direction de circulation.

3. Essieu à bras combinés selon la revendication 1 ou 2, **caractérisé en ce que** les bras longitudinaux (2, 3, 22) possèdent un axe longitudinal (L) qui s'étend dans leur direction longitudinale, un axe transversal (Q) qui s'étend transversalement à la direction de circulation, et un axe vertical (H) dirigé vers le haut, perpendiculaire à l'axe longitudinal (L) et perpendiculaire à l'axe transversal (Q), dans lequel les bras longitudinaux (2, 3, 22) possèdent, au moins dans un tronçon en longueur qui s'étend entre l'emplacement de liaison du profilé de torsion (4, 4') et le bras transversal (15, 16, 22), une résistance à la flexion plus faible vis-à-vis des sollicitations en flexion autour de l'axe vertical (H) que vis-à-vis des sollicitations à la flexion autour de l'axe transversal (Q).

4. Essieu à bras combinés selon la revendication 3, **caractérisé en ce que** le moment de résistance vis-à-vis de la flexion des bras longitudinaux (2, 3, 4) par rapport à l'axe vertical (H) est inférieur au moment de résistance vis-à-vis de la flexion par rapport à l'axe transversal (Q).

5. Essieu à bras combinés selon l'une des revendications 1 à 4, **caractérisé en ce que** les bras transversaux (15, 16, 18') sont agencés perpendiculairement à la direction de circulation.

6. Essieu à bras combinés selon l'une des revendications 1 à 5, **caractérisé en ce que** les entretoises supérieures et inférieures (17, 18) sont de longueurs inégales.

7. Essieu à bras combinés selon la revendication 1, **caractérisé en ce que** l'entretoise supérieure est remplacée par un bras de suspension (19) qui comprend un ressort de compression hélicoïdal (20) et un amortisseur (21).

8. Essieu à bras combinés selon la revendication 7, **caractérisé en ce que** le bras de suspension (19) est relié au bras longitudinal (22), au moins de façon indirecte, dans la zone de l'axe (R) de la roue.

9. Essieu à bras combinés selon la revendication 1, **caractérisé en ce qu'**un porte-roue (25) est réalisé d'un seul tenant sur les bras longitudinaux (22).

10. Essieu à bras combinés selon l'une des revendications 1 à 9, **caractérisé en ce que** les bras longitudinaux (2, 3, 22) s'étendent au-dessous de l'axe (R) de la roue.
